# EUROPEAN PATENT APPLICATION

(11) **EP 4 414 744 A1**
(43) Date of publication of application: **14.08.2024**
(21) Application number: 23218684.1
(22) Date of filing: 20.12.2023
(51) Int. Cl.: G01S 7/497, G06T 7/80

(54) **CALIBRATION METHOD AND SYSTEM, CONTROL APPARATUS, READABLE STORAGE MEDIUM AND DRIVING DEVICE**

(30) Priority: 07.02.2023 CN 202310126955
(71) Applicant: Anhui NIO Autonomous Driving Technology Co., Ltd., Hefei, Anhui 230601 (CN)
(72) Inventor: CAI, Yongkai, Hefei, Anhui Province, 230601 (CN); XU, Kang, Hefei, Anhui Province, 230601 (CN); XU, Ke, Hefei, Anhui Province, 230601 (CN); ZHI, Xiangyang, Hefei, Anhui Province, 230601 (CN)
(74) Representative: Vossius & Partner Patentanwälte Rechtsanwälte mbB

(57) **Abstract**

The disclosure relates to the field of calibration technologies, and provides a calibration method and system, a control apparatus, a readable storage medium, and a driving device, which are intended to solve the problem of how to perform large-quantity high-frequency vehicle sensor calibration tasks while ensuring calibration accuracy. In the method, a first target in a target apparatus is moved, based on calibration requirements of a driving device to be calibrated, to a calibrated position corresponding to a sensor type, a sensor is controlled to collect target patterns, calibrated data is obtained. Based on the calibrated data, parameters to be calibrated of the sensor that needs to be calibrated are calibrated by applying a preset calibration algorithm. Since a position of the first target in the target apparatus is movable, a plurality of sensors of the driving device to be calibrated can be calibrated without a need for a dedicatedly made calibration room, there is no need to customize targets for the plurality of sensors, and large-quantity high-frequency calibration tasks can be implemented while ensuring calibration accuracy, thereby effectively reducing calibration costs.

## Description

The present application claims priority of CN patent application 202310126955.0 filed on February 7, 2023 with the title "Calibration method and system, control apparatus, readable storage medium and driving device".

### Technical Field

The disclosure relates to the field of calibration technologies, and provides a calibration method and system, a control apparatus, a readable storage medium, and a driving device.

### Background Art

With the rapid development of autonomous driving technologies, an increasing number of mass-produced vehicles are equipped with sensors such as cameras, LiDARs, millimeter-wave radars, and ultrasonic radars to support auxiliary driving functions and some autonomous driving functions. Vehicle-mounted cameras mainly include telephoto pinhole cameras, wide-angle cameras with a larger field of view, and fisheye cameras with a field of view approaching or even exceeding 180 degrees, to provide vehicles with richly-textured and multi-view environmental perception information. LiDARs may obtain accurate three-dimensional ranging information without being affected by ambient light by actively transmitting and receiving laser light. Subsequent functions such as vehicle perception algorithms and planning decisions need to be based on intrinsic parameter and extrinsic parameter calibration results of a plurality of sensors.

Before a vehicle leaves the factory, there will be a dedicated high-precision calibration room equipped with several features for precise position measurement, expensive vehicle alignment systems, and automated field-end systems to coordinate with vehicle sensors to complete factory calibration. However, there are no corresponding high-precision and high-cost calibration facilities for more common post-sales maintenance scenarios and non-local test and collection tasks for vehicles. Moreover, the dedicatedly made calibration room cannot be set up in the above scenarios. As a result, requirements of large-quantity high-frequency calibration tasks cannot be met. Conventional sensor calibration projects require dedicatedly customized targets or dedicatedly designed matching calibration processes, so for a plurality of sensors, the complexity of the calibration projects is increased and the maintenance costs of a plurality of targets are increased. Conventional calibration does not have a data closed loop, and it can only solve problems of a single vehicle and a single sensor, and cannot make statistics on large-quantity calibration effects.

Accordingly, there is a need for a novel calibration solution to solve the above problems in the art.

### Summary

To overcome the above disadvantages, the disclosure is proposed to solve or at least partially solve the problem of how to perform large-quantity high-frequency vehicle sensor calibration tasks while ensuring calibration accuracy.

In a first aspect, the disclosure provides a calibration method, including:
obtaining calibration requirements of the driving device to be calibrated, where the calibration requirements include at least a sensor type of a sensor that needs to be calibrated in the driving device to be calibrated;
controlling, based on the sensor type, a first target in a target apparatus to move to a preset calibrated position corresponding to the sensor type; controlling the sensor that needs to be calibrated to collect a target pattern on the target apparatus to obtain calibrated data; and
calibrating, based on the calibrated data by applying a preset calibration algorithm, parameters to be calibrated of the sensor that needs to be calibrated, to obtain a calibration result.

In a technical solution of the above calibration method, a posture of the first target is adjustable, and before the step of "controlling the sensor that needs to be calibrated to collect a target pattern on the target apparatus to obtain calibrated data", the method further includes:
controlling, based on the sensor type, the posture of the first target to be adjusted to a preset posture corresponding to the sensor type.

In a technical solution of the above calibration method, the target apparatus further includes a second target, and before the step of "controlling the sensor that needs to be calibrated to collect a target pattern on the target apparatus to obtain calibrated data", the method further includes: determining, based on the calibration requirements, whether the sensor that needs to be calibrated includes a preset sensor; and
when the sensor that needs to be calibrated includes the preset sensor, performing, based on the second target, driving device positioning on the driving device to be calibrated.

In a technical solution of the above calibration method, the step of "controlling the sensor that needs to be calibrated to collect a target pattern on the target apparatus to obtain calibrated data" includes:
when the sensor that needs to be calibrated is the preset sensor, controlling the sensor that needs to be calibrated to collect the target patterns on the first target and/or the second target at the calibrated position to obtain the calibrated data; or
when the sensor that needs to be calibrated is not the preset sensor, controlling the sensor that needs to be calibrated to collect the target pattern on the first target at the calibrated position to obtain the calibrated data.

In a technical solution of the above calibration method, the method further includes:
transmitting and storing the calibration result to a calibration control device;
in response to a replacement instruction for a vehicle-side controller, reading, from the calibration control device, calibration parameters corresponding to the vehicle-side controller before replacement; and
sending the read calibration parameters to a replaced vehicle-side controller.

In a technical solution of the above calibration method, before the step of "controlling the sensor that needs to be calibrated to collect a target pattern on the target apparatus to obtain calibrated data", the method further includes:
controlling, based on the sensor type, the target pattern on the target apparatus to be adjusted to a preset target pattern corresponding to the sensor type.

In a technical solution of the above calibration method, the calibration requirements further include the parameters to be calibrated of the sensor that needs to be calibrated, and the method further includes:
determining, based on the calibration requirements, the parameters to be calibrated of the sensor,
where the parameters to be calibrated include intrinsic parameters and/or extrinsic parameters of the sensor.

In a second aspect, a control apparatus is provided. The control apparatus includes at least one processor and at least one storage apparatus storing a plurality of program codes, where the program codes are adapted to be loaded and executed by the processor to perform the calibration method in any one of the technical solutions of the above calibration method.

In a third aspect, a computer-readable storage medium is provided. A plurality of program codes are stored in the computer-readable storage medium, and the program codes are adapted to be loaded and executed by a processor to perform the calibration method in any one of the technical solutions of the above calibration method.

In a fourth aspect, a calibration system is provided. The system includes the control apparatus in the technical solution of the control apparatus and a target apparatus. The target apparatus includes a first target and a second target, a position of the first target is movable, a posture of the first target is adjustable, and target patterns on the first target and the second target are both replaceable.

In a fifth aspect, a driving device is provided. The driving device includes the control apparatus in the technical solution of the above control apparatus.

The above one or more technical solutions of the disclosure have at least one or more of the following beneficial effects:
In the technical solutions for implementing the disclosure, according to the disclosure, the first target in the target apparatus is moved, based on the calibration requirements of the driving device to be calibrated, to the calibrated position corresponding to the sensor type, the sensor that needs to be calibrated is controlled to collect the target pattern on the target apparatus, the calibrated data is obtained, and the parameters to be calibrated of the sensor that needs to be calibrated are calibrated based on the calibrated data by applying the preset calibration algorithm. Since the position of the first target in the target apparatus is movable, a plurality of sensors of the driving device to be calibrated can be calibrated without a need for a dedicatedly made calibration room, and there is no need to customize targets for the plurality of sensors. Through the above configuration method, in the disclosure, the first target can be moved to the corresponding calibrated position based on the type of the sensor that needs to be calibrated, which can achieve large-quantity high-frequency calibration tasks while ensuring calibration accuracy, effectively reduce calibration costs, effectively achieve the data closed loop of the calibration process due to the unified calibration algorithm used, and facilitate statistics on calibration results.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a calibration method according to an embodiment of the disclosure;
FIG. 2 is a schematic diagram of a composition structure of a first target according to an implementation of an embodiment of the disclosure;
FIG. 3 is a schematic diagram of a composition structure of a first target according to another implementation of an embodiment of the disclosure;
FIG. 4 is a schematic diagram of a composition structure of a second target according to an implementation of an embodiment of the disclosure;
FIG. 5 is a schematic flowchart of main steps of a calibration method according to an implementation of an embodiment of the disclosure;
FIG. 6 is a schematic flowchart of main steps of a calibration algorithm according to an implementation of an embodiment of the disclosure; and
FIG. 7 is a schematic flowchart of main steps of inheritance of calibration parameters when a vehicle-side controller is replaced according to an implementation of an embodiment of the disclosure.

### List of reference signs:

11: roller; 12: target pattern.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program codes, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

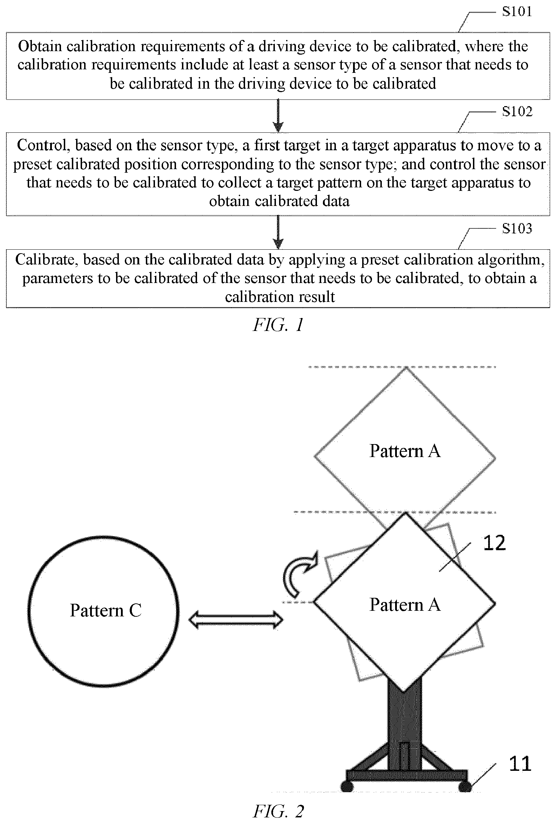

Referring to FIG. 1, FIG. 1 is a schematic flowchart of main steps of a calibration method according to an embodiment of the disclosure. As shown in FIG. 1, the calibration method in this embodiment of the disclosure mainly includes the following step S101 to step S103.

Step S101: Obtain calibration requirements of a driving device to be calibrated, where the calibration requirements include at least a sensor type of a sensor that needs to be calibrated in the driving device to be calibrated.

In this embodiment, the calibration requirements of the driving device to be calibrated may be obtained, where the calibration requirements may include the sensor type of the sensor that needs to be calibrated in the driving device to be calibrated.

In an implementation, the sensor that needs to be calibrated may include vehicle-mounted cameras, vehicle-mounted LiDARs, and other driving device sensors used for sensing the surrounding environment of driving devices. Vehicle-mounted cameras may include pinhole cameras, wide-angle cameras, fisheye cameras, etc.

In an implementation, the driving device may be a vehicle that supports auxiliary driving functions.

In an implementation, the calibration requirements may further include parameters to be calibrated of the sensor that needs to be calibrated, and the parameters to be calibrated may include intrinsic parameters and extrinsic parameters of the sensor. The parameters to be calibrated of the sensor may be determined according to the calibration requirements.

Step S102: Control, based on the sensor type, a first target in a target apparatus to move to a preset calibrated position corresponding to the sensor type; and control the sensor that needs to be calibrated to collect a target pattern on the target apparatus to obtain calibrated data.

In this embodiment, the first target apparatus may be moved, based on the sensor type, to the calibrated position corresponding to the sensor type, such that the sensor that needs to be calibrated collects the target pattern on the target apparatus to obtain the calibrated data. In other words, the position of the first target apparatus may be moved based on the sensor type, to meet the calibration requirements of the sensor that currently needs to be calibrated.

In an implementation, a posture of the first target is adjustable and the target pattern is replaceable.

In an implementation, reference may be made to FIG. 2. FIG. 2 is a schematic diagram of a composition structure of a first target according to an implementation of an embodiment of the disclosure. As shown in FIG. 2, rollers 11 are provided on the first target. The position of the first target is moved through the rollers 11. When the first target is at the calibrated position, the rollers 11 may be locked to implement position fixation. The posture of the first target is adjustable, so that rotation, pitch, and lifting of the target pattern 12 can be achieved. The target pattern 12 may be replaced, for example, the pattern A may be replaced with a pattern C.

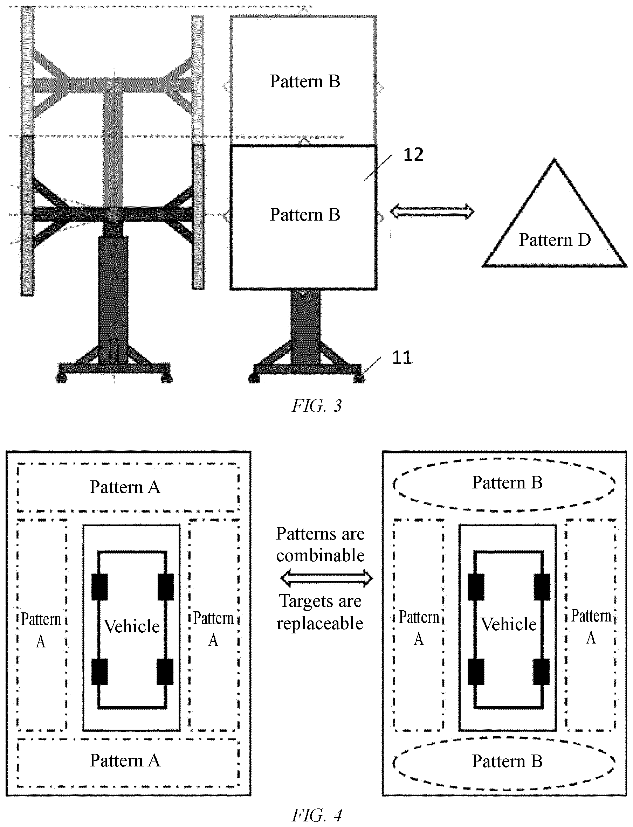

In an implementation, reference may be made to FIG. 3. FIG. 3 is a schematic diagram of a composition structure of a first target according to another implementation of an embodiment of the disclosure. As shown in FIG. 3, rollers 11 are provided on the first target. The position of the first target is moved through the rollers 11. When the first target is at the calibrated position, the rollers 11 may be locked to implement position fixation. Two target patterns 12 may be provided on the first target, and the two target patterns 12 are disposed back to back. Postures of the two target patterns 12 are adjustable, so that rotation, pitch, and lifting of the target patterns 12 can be achieved. The two target patterns 12 are both replaceable, for example, the pattern B may be replaced with a pattern D.

In an implementation, the first target may be manually moved to the calibrated position.

In an implementation, a sliding track may be disposed in advance to control the first target to slide on the sliding track to reach the calibrated position.

Step S103: Calibrate, based on the calibrated data by applying a preset calibration algorithm, parameters to be calibrated of the sensor that needs to be calibrated, to obtain a calibration result.

In this embodiment, the parameters to be calibrated of the sensor may be calibrated based on the calibrated data by applying the calibration algorithm, to obtain the calibration result.

In an implementation, the calibration result may be uploaded to the cloud to achieve storage and analysis of the calibration result. Due to the unified calibration algorithm used and the calibration result uploaded to the cloud, a closed loop of the calibrated data can be achieved. Regardless of whether the calibration is successful or failed, data analysis, calibration method optimization, and data statistics can be performed based on the calibration result.

Based on the above step S101 to step S103, in the embodiments of the disclosure, the first target in the target apparatus is moved, based on the calibration requirements of the driving device to be calibrated, to the calibrated position corresponding to the sensor type, the sensor that needs to be calibrated is controlled to collect the target pattern on the target apparatus, the calibrated data is obtained, and the parameters to be calibrated of the sensor that needs to be calibrated are calibrated based on the calibrated data by applying the preset calibration algorithm. Since the position of the first target in the target apparatus is movable, a plurality of sensors of the driving device to be calibrated can be calibrated without a need for a dedicatedly made calibration room, and there is no need to customize targets for the plurality of sensors. Through the above configuration method, in the embodiments of the disclosure, the first target can be moved to the corresponding calibrated position based on the type of the sensor that needs to be calibrated, which can achieve large-quantity high-frequency calibration tasks while ensuring calibration accuracy, effectively reduce calibration costs, effectively achieve the data closed loop of the calibration process due to the unified calibration algorithm used, and facilitate statistics on calibration results.

In an implementation of this embodiment of the disclosure, before step S103, the disclosure may further include the following step S104.

Step S104: Control, based on the sensor type, the posture of the first target to be adjusted to a preset posture corresponding to the sensor type.

In this implementation, a posture of the first target corresponding to each sensor may be preset. During calibration, the posture of the first target may be adjusted, based on the sensor type, to the posture corresponding to the sensor type.

In an implementation of this embodiment of the disclosure, the target apparatus may further include a second target. Before step S102, the disclosure may further include the following step S 105 and step S106.

Step S 105: Determine, based on the calibration requirements, whether the sensor that needs to be calibrated includes a preset sensor.

Step S106: When the sensor that needs to be calibrated includes the preset sensor, perform, based on the second target, driving device positioning on the driving device to be calibrated.

In this implementation, whether the preset sensor needs to be calibrated may be determined based on calibration requirements. When the preset sensor needs to be calibrated, the driving device may be positioned based on the second target. When some sensors need to be calibrated, the driving device may be positioned based on a position relationship between sensors that do not need to be calibrated and the sensors that need to be calibrated, and a calibrated position where the first target apparatus needs to be placed may be further determined.

In an implementation, the preset sensor may be a sensor that may see the ground around the driving device, such as a surround-view fisheye camera.

In an implementation, reference may be made to FIG. 4. FIG. 4 is a schematic diagram of a composition structure of a second target according to an implementation of an embodiment of the disclosure. As shown in FIG. 4, the second target apparatus may be composed of a ground calibration cloth. A position of the driving device (that is, the position marked "Vehicle" in FIG. 4) is indicated on the ground calibration cloth, and the driving device is positioned according to this position. A target pattern is also provided on the second target, and the target pattern may be replaced, for example, the pattern A may be replaced with a pattern B.

In an implementation, step S 103 may include the following step S 103 1 and step S 1032.

Step S 1031: When the sensor that needs to be calibrated is the preset sensor, control the sensor that needs to be calibrated to collect the target patterns on the first target and/or the second target at the calibrated position to obtain the calibrated data.

Step S1032: When the sensor that needs to be calibrated is not the preset sensor, control the sensor that needs to be calibrated to collect the target pattern on the first target at the calibrated position to obtain the calibrated data.

In this implementation, if the preset sensor needs to be calibrated, the sensor that needs to be calibrated may be controlled to collect the target patterns on the first target and the second target at the calibrated position to obtain the calibrated data. For example, for a surround-view fisheye camera that can see the ground around the driving device, the surround-view fisheye camera may be controlled to collect the target pattern on the ground calibration cloth (second target) to obtain calibrated data. For a camera behind a windshield, the camera behind the windshield may be controlled to collect the target pattern on the first target to obtain calibrated data. If only some sensors need to be calibrated, the second target may not be provided, and only sensors that need to be calibrated are controlled to collect the target pattern on the first target located at the corresponding calibrated position.

In an implementation of this embodiment of the disclosure, the disclosure may further include the following step S 107 to step S109.

Step S107: Transmit and store the calibration result to a calibration control device.

Step S108: In response to a replacement instruction for a vehicle-side controller, read, from the calibration control device, calibration parameters corresponding to the vehicle-side controller before replacement.

Step S109: Send the read calibration parameters to a replaced vehicle-side controller.

In this implementation, the calibration result may be transmitted and stored to the calibration control device. When the vehicle-side controller needs to be replaced, the calibration parameters may be directly inherited to the replaced vehicle-side controller without a need to recalibrate the intrinsic parameters and extrinsic parameters of the sensor, which can save manpower and time costs. If a sensor is replaced, only the replaced sensor is calibrated after the calibration parameters are inherited, and there is no need to recalibrate a sensor that has not been replaced. The calibration control device may be a notebook computer, a tablet computer, or other devices used for calibration, or it may be a cloud server.

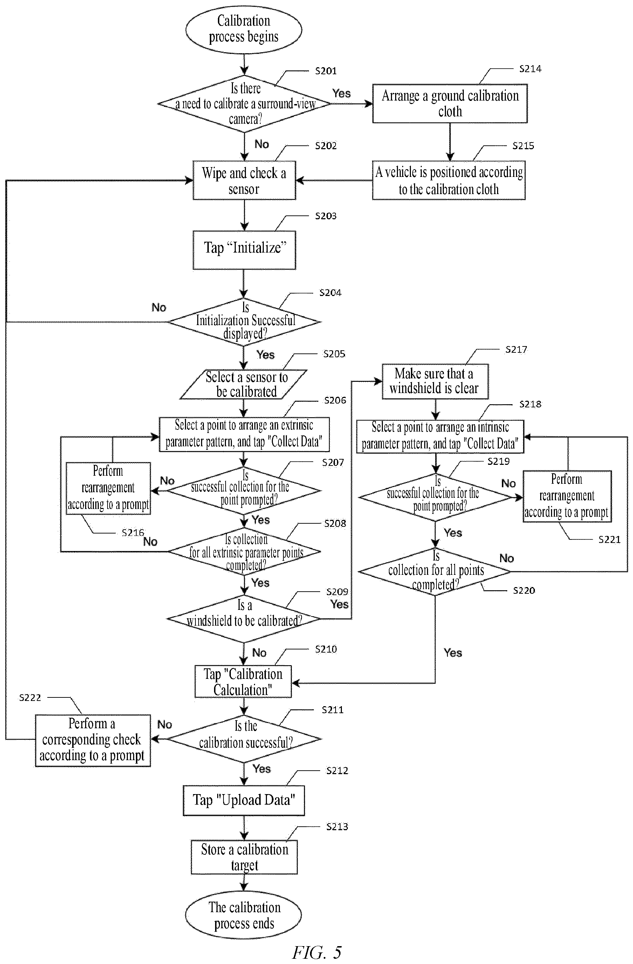

In an implementation, reference may be made to FIG. 5. FIG. 5 is a schematic flowchart of main steps of a calibration method according to an implementation of an embodiment of the disclosure. As shown in FIG. 5, the calibration method may include the following step S201 to step S222.

Step S201: Determine whether there is a need to calibrate a surround-view camera; and if yes, proceed to step S214; or if no, proceed to step S202.

Step S202: Wipe and check a sensor.

Step S203: Tap "Initialize".

Step S204: Determine whether to display Initialization Successful; and if yes, proceed to step S205; or if no, proceed to step S202.

Step S205: Select a sensor to be calibrated.

Step S206: Select a point (calibrated position) to arrange an extrinsic parameter pattern (first target), and tap "Collect Data".

Step S207: Determine whether collection for the point is successful; and if yes, proceed to step S208; or if no, proceed to step S216.

Step S208: Determine whether collection for all extrinsic parameter points is completed; and if yes, proceed to step S209; or if no, proceed to step S206.

Step S209: Determine whether to calibrate a camera behind a windshield; and if yes, proceed to step S217; or if no, proceed to step S210.

Step S210: Tap Calibration Calculation.

Step S211: Determine whether the calibration is successful; and if yes, proceed to step S212; or if no, proceed to step S222.

Step S212: Tap Upload Data.

Step S213: Store the calibration target (target apparatus).

Step S214: Arrange a ground calibration cloth (second target) and proceed to step S202.

Step S215: Position a vehicle (driving device) according to the calibration cloth.

Step S216: Rearrange the extrinsic parameter pattern according to a prompt, and proceed to step S206.

Step S217: Make sure that the windshield is clear.

Step S218: Select a point to arrange an intrinsic parameter pattern (first target), and tap Collect Data.

Step S219: Determine whether to prompt successful collection for the point; and if yes, proceed to step S220; or if no, proceed to step S221.

Step S220: Determine collection for all points is completed, and proceed to step S210.

Step S221: Rearrange the intrinsic parameter pattern according to a prompt, and proceed to step S218.

Step S222: Perform a corresponding check according to a prompt, and proceed to step S202.

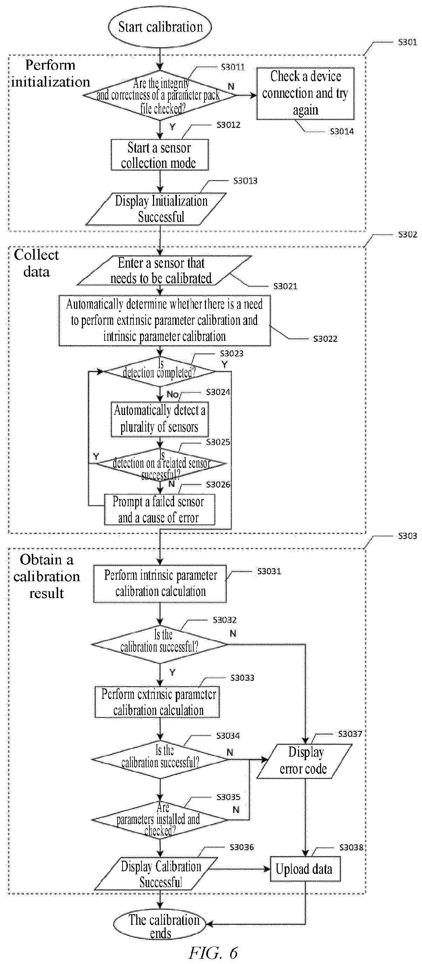

In an implementation, reference may be made to FIG. 6. FIG. 6 is a schematic flowchart of main steps of a calibration algorithm according to an implementation of an embodiment of the disclosure. As shown in FIG. 6, the calibration algorithm may include the following step S301 to step S303.

Step S301: Perform initialization.

Step S301 further includes the following step S3011 to step S3014.

Step S3011: Check whether a parameter pack file is complete and correct; and if yes, proceed to step S3012; or if no, proceed to step S3014.

Step S3012: Start a sensor collection mode.

Step S3013: Display Initialization Successful.

Step S3014: Check a device connection and try again.

Step S302: Collect calibrated data.

Step S302 further includes the following step S3021 to step S3026.

Step S3021: Enter a sensor that needs to be calibrated.

Step S3022: Automatically determine whether there is a need to perform extrinsic parameter calibration and intrinsic parameter calibration.

Step S3023: Determine whether detection is completed; and if yes, proceed to step S303; or if no, proceed to step S3024.

Step S3024: Automatically detect a plurality of sensors.

Step S3025: Determine whether detection on a related sensor is completed; and if yes, proceed to step S3023; or if no, proceed to step S3026.

Step S3026: Prompt a failure and a cause of a sensor error, and proceed to step S3023.

Step S303: Obtain a calibration result.

Step S303 further includes the following step S3031 to step S3038.

Step S3031: Perform intrinsic parameter calibration calculation.

Step S3032: Determine whether intrinsic parameter calibration is successful; and if yes, proceed to step S3033; or if no, proceed to step S3037.

Step S3033: Perform extrinsic parameter calibration calculation.

Step S3034: Determine whether extrinsic parameter calibration is successful; and if yes, proceed to step S3035; or if no, proceed to step S3037.

Step S3035: Install calibration parameters and check whether it is successful; and if yes, proceed to step S3036; or if no, proceed to step S3037.

Step S3036: The calibration is successful, and proceed to step S3038.

Step S3037: Display error code
Step S3038: Upload data.

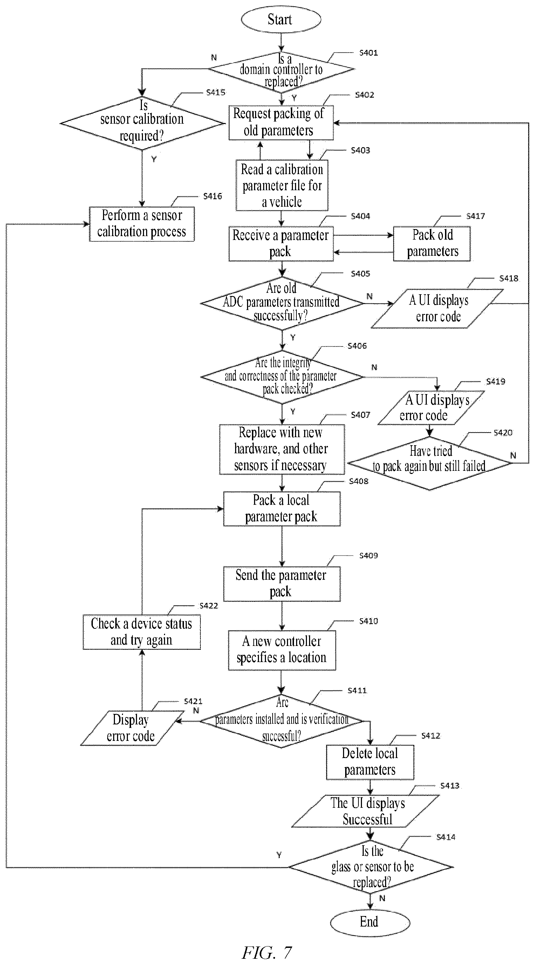

In an implementation, reference may be made to FIG. 7. FIG. 7 is a schematic flowchart of main steps of inheritance of calibration parameters when a vehicle-side controller is replaced according to an implementation of an embodiment of the disclosure. As shown in FIG. 7, inheritance of calibration parameters when a vehicle-side controller is replaced may include the following step S401 to step S422.

Step S401: The calibration control device determines whether there is a need to replace a domain controller (vehicle-side controller); and if yes, proceed to step S402; or if no, proceed to step S415.

Step S402: The calibration control device requests packing of old parameters.

Step S403: The calibration control device reads a calibration parameter file for a vehicle (the driving device).

Step S404: The calibration control device receives a parameter pack.

Step S405: Determine whether old calibration parameters in the calibration control device are successfully transmitted; and if yes, proceed to step S406; or if no, proceed to step S418.

Step S406: Check whether the parameter pack is complete; and if yes, proceed to step S407; or if no, proceed to step S419.

Step S407: Replace with new hardware (vehicle-side controller), and other sensors if necessary.

Step S408: The calibration control device packs a local calibration parameter pack.

Step S409: Send the parameter pack to a replaced vehicle-side controller.

Step S410: The replaced vehicle-side controller saves the parameter pack to a specified location.

Step S411: Determine whether calibration parameters are installed and a verification is successful; and if yes, proceed to step S412; or if no, proceed to step S421.

Step S412: Delete local calibration parameters on the calibration control device.

Step S413: A UI operation interface displays Successful.

Step S414: Determine whether a windshield or a sensor needs to be replaced; and if yes, proceed to step S416; or if no, end the process.

Step S415: Determine whether sensor calibration is required; and if yes, proceed to step S416.

Step S416: Perform a sensor calibration process.

Step S417: The vehicle-side controller before replacement packs calibration parameters.

Step S418: The UI displays error code, and proceed to step S402.

Step S419: The UI displays error code, and proceed to step S420.

Step S420: Determine whether repacking of the calibration control device still fails, and if no, proceed to step S402.

Step S421: Display error code, and proceed to step S422.

Step S422: Detect a device status and try again, and proceed to step S408.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program codes, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In an embodiment of the control apparatus according to the disclosure, the control apparatus includes a processor and a storage apparatus. The storage apparatus may be configured to store a program for performing the calibration method of the above method embodiments. The processor may be configured to execute a program in the storage apparatus, where the program includes, but is not limited to, the program for performing the calibration method of the above method embodiments. For ease of description, only parts related to the embodiments of the disclosure are shown. For specific technical details that are not disclosed, reference may be made to the method part of the embodiments of the disclosure.

The control apparatus in this embodiment of the disclosure may be a control apparatus formed by various electronic devices. In some possible implementations, the control apparatus may include a plurality of storage apparatuses and a plurality of processors. The program for performing the calibration method of the above method embodiments may be divided into a plurality of segments of subprogram, and each segment of subprogram may be loaded and executed by the processor to perform a different step of the calibration method of the above method embodiments. Optionally, each segment of subprogram may be stored in a different storage apparatus, and each processor may be configured to execute programs in one or more storage apparatuses to jointly implement the calibration method of the above method embodiments. In other words, each processor performs different steps of the calibration method of the above method embodiments, to jointly implement the calibration method of the above method embodiments.

The plurality of processors may be processors deployed on a same device. For example, the foregoing control apparatus may be a high-performance device including a plurality of processors, and the plurality of processors may be processors configured on the high-performance device. Alternatively, the plurality of processors may be processors deployed on different devices. For example, the foregoing control apparatus may be a server cluster, and the plurality of processors may be processors on different servers in the server cluster.

Further, the disclosure further provides a computer-readable storage medium. In an embodiment of the computer-readable storage medium according to the disclosure, the computer-readable storage medium may be configured to store a program for performing the calibration method of the above method embodiments, and the program may be loaded and executed by a processor to implement the above calibration method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a calibration system. In an embodiment of a calibration system according to the disclosure, the calibration system may include the control apparatus in the control apparatus embodiment and a target apparatus. The target apparatus may include a first target and a second target, a position of the first target is movable, a posture of the first target is adjustable, and target patterns on the first target and the second target are both replaceable.

Further, the disclosure further provides a driving device. In an embodiment of the driving device according to the disclosure, the driving device may include the control apparatus in the control apparatus embodiments.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A calibration method, comprising:
obtaining calibration requirements of a driving device to be calibrated, wherein the calibration requirements comprise at least a sensor type of a sensor that needs to be calibrated in the driving device to be calibrated;
controlling, based on the sensor type, a first target in a target apparatus to move to a preset calibrated position corresponding to the sensor type;
controlling the sensor that needs to be calibrated to collect target patterns on the target apparatus to obtain calibrated data; and
calibrating, based on the calibrated data by applying a preset calibration algorithm, parameters to be calibrated of the sensor that needs to be calibrated, to obtain a calibration result.

2. The calibration method according to claim 1, wherein a posture of the first target is adjustable, and before the step of "controlling the sensor that needs to be calibrated to collect target patterns on the target apparatus to obtain calibrated data", the method further comprises:
controlling, based on the sensor type, the posture of the first target to be adjusted to a preset posture corresponding to the sensor type.

3. The calibration method according to claim 1 or 2, wherein the target apparatus further comprises a second target, and before the step of "controlling the sensor that needs to be calibrated to collect target patterns on the target apparatus to obtain calibrated data", the method further comprises:
determining, based on the calibration requirements, whether the sensor that needs to be calibrated comprises a preset sensor; and
when the sensor that needs to be calibrated comprises the preset sensor, performing, based on the second target, driving device positioning on the driving device to be calibrated.

4. The calibration method according to claim 3, wherein the step of "controlling the sensor that needs to be calibrated to collect target patterns on the target apparatus to obtain calibrated data" comprises:
when the sensor that needs to be calibrated is the preset sensor, controlling the sensor that needs to be calibrated to collect the target pattern-s- on the first target and/or the second target at the calibrated position to obtain the calibrated data; or
when the sensor that needs to be calibrated is not the preset sensor, controlling the sensor that needs to be calibrated to collect the target patterns on the first target at the calibrated position to obtain the calibrated data.

5. The calibration method according to any one of claims 1 to 4, further comprising:
transmitting and storing the calibration result to a calibration control device;
in response to a replacement instruction for a vehicle-side controller, reading, from the calibration control device, calibration parameters corresponding to the vehicle-side controller before replacement; and
sending the read calibration parameters to a replaced vehicle-side controller.

6. The calibration method according to any one of claims 1 to 5, wherein before the step of "controlling the sensor that needs to be calibrated to collect target patterns on the target apparatus to obtain calibrated data", the method further comprises:
controlling, based on the sensor type, the target patterns on the target apparatus to be adjusted to a preset target pattern corresponding to the sensor type.

7. The calibration method according to any one of claims 1 to 6, wherein the calibration requirements further comprise the parameters to be calibrated of the sensor that needs to be calibrated, and the method further comprises:
determining, based on the calibration requirements, the parameters to be calibrated of the sensor;
wherein the parameters to be calibrated comprise intrinsic parameters and/or extrinsic parameters of the sensor.

8. A control apparatus, comprising at least one processor and at least one storage apparatus storing a plurality of program codes, wherein the program codes are adapted to be loaded and executed by the processor to perform the calibration method according to any one of claims 1 to 7.

9. A non-transitory computer-readable storage medium storing a plurality of program codes, wherein the program codes are adapted to be loaded and executed by a processor to perform the calibration method according to any one of claims 1 to 7.

10. A calibration system, comprising the control apparatus and the target apparatus according to claim 8, wherein the target apparatus comprises a first target and a second target, a position of the first target is movable, a posture of the first target is adjustable, and target patterns on the first target and the second target are both replaceable.

11. A driving device, comprising the control apparatus according to claim 8.
